# EUROPÄISCHE PATENTSCHRIFT

(11) **EP 0 810 976 B1**
(45) Veröffentlichungstag und Bekanntmachung des Hinweises auf die Patenterteilung: **21.04.1999**
(21) Anmeldenummer: 96902225.0
(22) Anmeldetag: 09.02.1996
(51) Int. Cl.: C02F 3/06, C02F 3/30, C02F 3/26

(54) **SYSTEM ZUR REINIGUNG VON ROHWASSER, INSBESONDERE ABWASSER**
PURIFICATION SYSTEM FOR RAW WATER, IN PARTICULAR FOR WASTE WATER
SYSTEME D'EPURATION D'EAUX BRUTES, NOTAMMENT D'EAUX USEES

(30) Priorität: 21.02.1995 DE 19505842; 09.03.1995 DE 19508420; 16.03.1995 DE 19509483
(43) Veröffentlichungstag der Anmeldung: 10.12.1997
(73) Patentinhaber: Bergen, Peter, 65207 Wiesbaden (DE)
(72) Erfinder: Bergen, Peter, 65207 Wiesbaden (DE)
(74) Vertreter: Zwirner, Gottfried, Dipl.-Ing. Dipl.-W.-Ing.
(86) Internationale Anmeldenummer: DE9600215
(87) Internationale Veröffentlichungsnummer: WO9626160

(56) Entgegenhaltungen:
- EP-A- 0 273 174
- EP-A- 0 504 019
- DE-A- 2 111 794
- DE-A- 3 208 977
- DE-A- 3 419 139
- FR-A- 2 562 536
- US-A- 5 006 251

## Beschreibung

Die Erfindung betrifft ein System zum Reinigen von Rohwasser, insbesondere Abwasser, vorzugsweise in vorgeklärtem Zustand, bei dem das Abwasser durch Reaktoren zur Ermöglichung biologischer Prozesse fließt. Derartige Systeme von Kläranlagen weisen in der Regel als Reaktoren Belebungsbecken oder als sogenannte Festbettreaktoren, Tropfkörper oder Tauchkörper auf. Es ist, wie beispielsweise der Druckschrift EP-0 227 081 B1 zu entnehmen, auch bekannt, einem Tropfkörper einen Schwimmkornfilter nachzuschalten. Tropfkörperanlagen besitzen eine Reihe von Vorteilen. Wird jedoch das Wachstum des biologischen Rasens forciert und die für den biologischen Rasen zur Verfügung stehende Oberfläche pro Raumeinheit vergrößert, so besteht die Gefahr, daß der Tropfkörper zuwächst und es bereitet Schwierigkeiten, auf den Tropfkörper im Sinne eines einwandfrei ablaufenden Prozesses im genügenden Maße einzuwirken.

Außerdem ist eine Anpassung an sich ändernde Betriebsbedingungen schlecht möglich.

Der Erfindung liegt daher die Aufgabe zugrunde, bei einer Kläranlage mit Festbettreaktoren die Raumbelastung zu erhöhen und dabei einen sicheren Ablauf des Reinigungsprozesses sowie Betriebsanpassungen zu geährleisten.

Die Lösung der Aufgabe ist bereits durch ein Verfahren nach Anspruch 1 sowie durch eine Vorrichtung nach Anspruch 11 gekennzeichnet.

Die Erfindung besteht bei einem System der eingangs genannten Art darin, daß das Abwasser nach der Vorreinigungsklärung in an sich bekannte von unten nach oben durchflossene Schwimmkornfilter in Form von abgeschlossenen Filterbehältern gelangt, daß die Filterbehälter entsprechend dem gewünschten Reinigungsvorgang und zur Anpassung an sich ändernde Betriebsbedingungen durch Ventile austauschbar in Reihe, parallel oder wechselseitig austauschbar geschaltet sind und daß Gaszuführeinrichtungen in der Rohwasserzuführleitung bzw. in der Verbindungsleitung zwischen den Filterbehältern und/oder an dem Filterbehälter direkt zum Einleiten eines Mediums zur Prozeßunterstützung vorgesehen sind.

Dabei wird unter System sowohl ein Verfahren als auch eine Vorrichtung verstanden.

Weitere vorteilhafte und zweckmäßige Ausgestaltungen der Erfindung sind in den Unteransprüchen gekennzeichnet.

Die Erfindung soll nachfolgend anhand von Ausführungsbeispielen unter Bezugnahme auf die beigefügten Zeichnungen näher erläutert werden.

In diesen zeigen:
- Fig. 1: ein System zum Reinigen von Abwasser
- Fig. 2: ein abgewandeltes System mit vorgeschalteter Denitrifikation
- Figur 3 -: eine weitere Abwandlung mit wechselseitiger Erstbeschickung des ersten und zweiten Filterbehälters

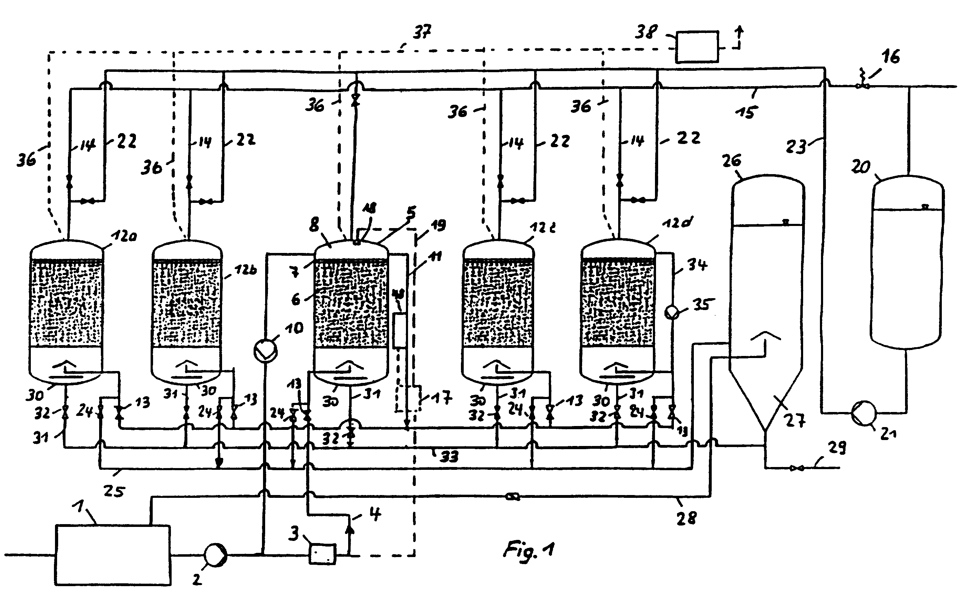

In Figur 1 ist das System zum Reinigen von Abwasser schematisch dargestellt.
Wie aus der Figur 1 zu entnehmen ist, gelangt das Abwasser über die mechanische Vorreinigung 1 als Rohwasser mit Hilfe einer Förderpumpe 2 zu einer Gaszufuhreinrichtung 3. Hier wird das Rohwasser mit Sauerstoff angereichert, beispielsweise durch einen Injektor und gelangt über die Rohwasserzuführleitung 4 zu einem Schwimmkornfilter in Form eines abgeschlossenen Filterbehälters 5. Der Filterbehälter 5 ist mit einem Schwimmkornmaterial 6 gefüllt, wie es im Handel unter dem Namen Styriso erhältlich ist. Das Schwimmkornmaterial wird oben durch einen Düsenboden 7 begrenzt und durch das den Filterbehälter 5 durchströmende Rohwasser gegen den Düsenboden 7 gedrückt. Über dem Düsenboden 7 bildet sich ein Reinwasserbereich 8 aus, von dem neben einer Rezirkulationsleitung 9 mit Umwälzpumpe 10 eine Abführleitung 11 abgeht, die zu den nachfolgenden Filterbehältern 12a-12d führt. Die Abführleitung 11 führt über ein Ventil 13 am Boden zu den Filterbehältern 12a-12d und an der Oberseite der Filterbehälter 12a-12d gehen entsprechende Reinwasserleitungen 14, die in die Reinwassersammelleitung 15 münden, in der ein Druckhalteventil 16 vorgesehen ist. An der vom Filterbehälter 5 abgehenden Abführleitung 11 bzw. Verbindungsleitung zu den Filtern 12a-12d kann eine weitere Gaszuführeinrichtung 17 vorgesehen sein. Im Filterbehälter 5 ist im oberen Bereich ein Niveaumeßgerät 18 oder in der Abführleitung 11 eine Meß- und Steuereinrichtung (48) vorgesehen, daß die Gaszuführeinrichtung 3 und gegebenenfalls auch das wahlweise vorgesehene Gaszuführgerät 17 über eine Leitung 19, die gestrichelt dargestellt ist, regelt. An die Reinwasserleitung 15 ist hinter dem Druckhalteventil 16 ein Spülwasserspeicher 20 angeschlossen, der über eine Spülwasserpumpe 21 und entsprechende Spülwasserleitungen 22, die von einer Spülwassersammelleitung 23 abgehen, mit den Filterbehältern 5, 12a-12d verbunden ist.

Bei einem Spülstoß wird bei Betätigung der Spülwasserpumpe 21 das Zufuhrventil 13 geschlossen und das Spülventil 24 geöffnet, so daß das Spülwasser über die Spülwasserabflußleitung 25 in den Absetzbehälter 26 gelangen kann. Nachdem sich der Schlamm im unteren Absetzbereich 27 des Absetzbehälters 26 abgesetzt hat, wird das Klarwasser über eine Klarwasserrückführleitung 28 der Vorreinigung 1 zugeführt. Der Schlamm wird aus dem Absetzbehälter 26 über die Schlammabzugleitung 29 zur Schlammbehandlung oder einem Schlammstapelbehälter geführt. Ebenso ist jeder Filterbehälter 5, 12a-d am Boden mit einem Schlammabsetzbereich 30 versehen, von dem eine Schlammabführleitung 31 mit Schlammabzugsventil 32 abgeht und in eine Schlammsammelleitung 33 mündet. Jeder weitere Filterbehälter 5, 12a-12d kann mit einer Rezirkulationsleitung 34 mit Rezirkulationspumpe 35 versehen sein, wie es am Filterbehälter 12d dargestellt ist.
Gemäß einer speziellen Ausgestaltung des Systems kann vorgesehen sein, daß von jedem Filterbehälter 5, 12a-12d eine,gestrichelt dargestellt, Entlüftungsleitung 3E abgeht. Die Entlüftungsleitungen 36 münden in eine, ebenfalls gestrichelt dargestellt, Entlüftungssammelleitung 37 ein, die mit einem Luftfilter 38 versehen ist, der verhindert, daß durch die aus der Kläranlage ausströmende Luft die Umwelt verunreinigt wird. Insbesondere, wenn die Kläranlage mit Luft gefahren wird, und die Gaszufuhreinrichtungen 3 und 17 Luft den Filterbehältern 5, 12a-12d zuführen, muß ein über die Entlüftungsleitung 36,37 abfließender Überschuß zugeführt werden, um die erforderliche Menge Sauerstoff einzubringen.
Im vorliegenden Beispiel sind die Filterbehälter 12a-12b in Parallelanordnung dargestellt.
Es ist aber auch eine Reihenanordnung möglich, beispielsweise die Filterbehälter 12a und 12b und dahinter die Filterbehälter 12c und 12d.

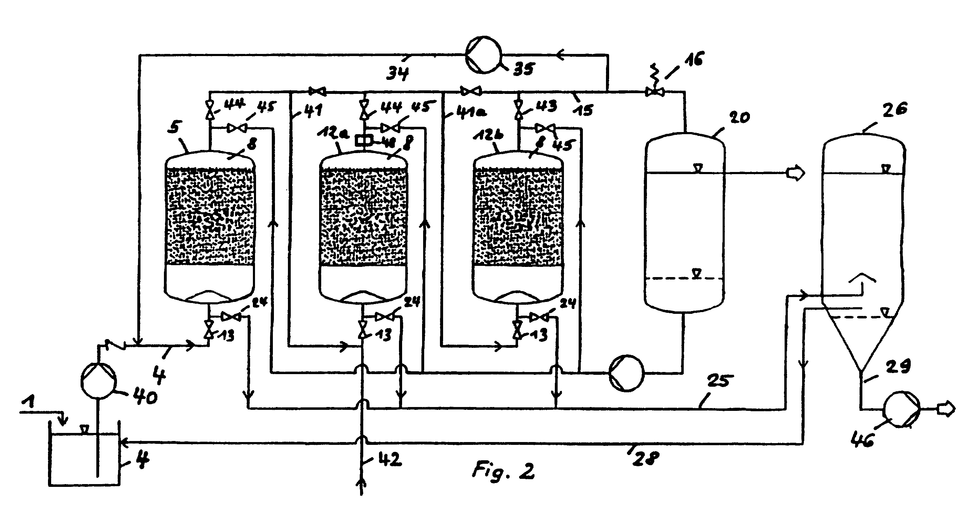

In Figur 2 ist das System in seiner Ausgestaltung mit vorgeschalteter Denitrifikation dargestellt. In den ersten anoxisch betriebenen Filterbehälter 5 mündet unten eine von der Vorklärung 1, mit einer Rohwasserpumpe 40 versehene Rohwasserzuführleitung 4 ein. Vom Reinwasserbereich 8 geht eine Verbindungsleitung 41 zum Filterbehälter 12a, wobei die Verbindungsleitung 41 in eine Gaszuführleitung 42 einmündet, die dem Wasser, das von dem anoxisch betriebenen Filterbehälter 5 kommt, Luft oder reinen Sauerstoff zuführt. Nach der Denitrifikation im Filterbehälter 5 kann somit im Filterbehälter 12a ein Abbau von Kohlenstoffverbindungen erfolgen. Das Wasser wird weiter über die Verbindungsleitung 41a in den Filterbehälter 12b geleitet, wo vorzugsweise eine Nitrifikation erfolgt. Über die Reinwassersammelleitung 15, die mit einem Druckhalteventil 16 versehen ist, wird das Reinwasser über den Spülwasserbehälter 20 abgeführt. Von der Reinwassersammelleitung 15 geht eine Rezirkulationsleitung 34 mit einer Rezirkulationspumpe 5 zurück zur Rohwasserzuführleitung 4. Während des Spülvorganges werden die entsprechenden Spülventile 24 geöffnet und die Ventile 13 geschlossen, ebenso das Reinwasserventil 44 des Filterbehälters 5, 12a-12b, der gespült werden soll und sein Spülwasserzuführventil (45) geöffnet. Das Spülwasser gelangt über die Spülwasserabflußleitung 25 in den Absetzbehälter 26 und das Klarwasser von dort über die Klarwasserrückführleitung 28 zur Rohwasserzuführung 4. Der Schlamm wird über die Schlammabzugsleitung 29 mit Schlammförderpumpe 46 abgezogen. Anstelle des anoxischen Filterbehälters 5 und der aeroben Filterbehälter 12 a und 12 b kann eine aus einer Vielzahl von Filterbehältern 5 bestehende anoxische und aerobe Aufbereitungsstufe vorgesehen sein.

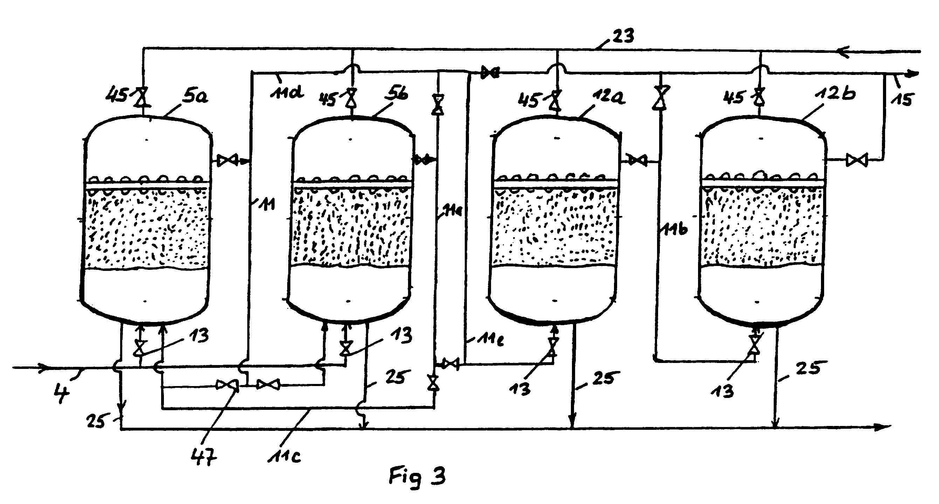

In Figur 3 ist eine weitere Ausgestaltung des Systems dargestellt, bei dem wahlweise das Rohwasser dem ersten Filterbehälter 5a oder dem zweiten Filterbehälter 5b zugeführt werden kann. Durch die Ventile 13 in der Rohwasserzuführleitung 4 wird der Zufluß zu dem einen oder anderen Filterbehälter 5a, 5b, gesteuert. Wird der Filterbehälter 5a beaufschlagt, gelangt das Wasser über die Abführleitung bzw. Verbindungsleitung 11 zum Behälter 5b, wobei das Verbindungsleitungsventil 47 geschlossen ist und 47a geöffnet ist. Von dort gelangt das Wasser über die Verbindungsleitung 11a in den Filterbehälter 12a und über die Verbindungsleitung llb in den Behälter 12b und von dort schließlich in die Reinwassersammelleitung 15. Das Rohwasser kann aber direkt auch bei entsprechender Stellung der Ventile 13 in den Filterbehälter 5b gelangen und bei entsprechender Ventilstellung weiter über die die Verbindungsleitungen lla und llc in den Filterbehälter 5a. Von dort gelangt das Wasser über die Verbindungsleitung lld und lle in den Filterbehälter 12a und weiter in den Filterbehälter 12b. Auf diese Weise ist es möglich, die Filter 5a und 5b wechselseitig zuerst zu beaufschlagen, wobei auch ein wechselseitig anoxischer oder aerober Betrieb möglich ist. Über entsprechende Ventilstellunge können die Filterbehälter 5a,5b und 12a, 12b parallel oder in Reihe betrieben werden. Alle Filterbehälter 5a, 5b, 12a und 12b sind mit einer Spülwasserabflußleitung 25 versehen, die zu einem nicht dargestellten Absetzbehälter führt.
Beim Spülvorgang werden die entsprechende Ventile 13 geschlossen und die Spülwasserzuführungsventile 45 geöffnet, die den Zufluß von der Spulwassersammelleitung 23 freigeben, die von einem nicht dargestellten Spülwasserspeicher kommt.
Das erfindungsgemäße System ermöglicht somit eine optimale Anpassung an die erforderlichen biologischen Prozesse, auch in Abhängigkeit von sich ändernden Erfordernissen und Rohwasserzuständen, sowie sich den ergebenden Durchflußmengen.
Weitere Ausgestaltungen der Erfindung bestehen darin, daß zur Erhöhung der Sauerstofflöslichkeit eine Druckerhöhung in den Filternbehälter (5,12) vorgenommen wird. Zur Anpassung an sich ändernde Betriebsbedingungen, wie Rohwasserqualität und - quantität, sowie sich ergebende Forderungen an den Reinigungszustand kann vorgesehen sein, daß eine on-line angeordnete Meß-und Steuereinrichtung ( 48) die Schaltung der verschiedenen Filterbehälter (5,12)steuert, Medien zur Prozeßunterstützung kontinuierlich oder intermittierend einleitet und/oder den Druck in den Filterbehältern (5,12) verstellt.

## Patentansprüche

1. Verfahren zum Reinigen von Rohwasser, insbesondere Abwasser, vorzugsweise in vorgereinigtem Zustand, bei dem das Abwasser zur Ermöglichung biologischer Prozesse durch Reaktoren (5, 12) fließt, in denen mehrere aufeinanderfolgende Behandlungsstufen mit unterschiedlichen Parametern stattfinden,
dadurch gekennzeichnet, daß
- mehrere Schwimmkornfilter in abgeschlossenen Filterbehältern (5, 12) bereitgestellt werden,
- die Filterbehälter (5, 12) nicht in einer festen Zuordnung, sondern entsprechend dem gewünschten Reinigungsvorgang und zur Anpassung an sich ändernde Betriebsbedingungen durch Ventile (13, 47) austauschbar in Reihe, parallel oder wechselseitig geschaltet werden
- eine Gaszuführeinrichtung (3, 17) in der Rohwasserzuführleitung (4) bzw. in der Verbindungsleitung (11) zwischen den Filterbehältern (5, 12) und/oder an den Filterbehältern (5, 12) direkt zum Einleiten eines Mediums zur Prozeßunterstützung vorgesehen wird, und
- zur Behandlung des Abwassers nach der Vorreinigung (1) die Filter ausschließlich von unten nach oben durchflossen werden.

2. Verfahren nach Anspruch 1,
dadurch gekennzeichnet,
daß der erste Filterbehälter (5) nach der Vorreinigung jeweils gegenüber Luft abgeschlossen und damit anoxisch betrieben wird,
daß das Rohwasser anschließend durch einen oder mehrere Filterbehälter (12) geleitet wird, wobei reiner Sauerstoff zugeführt wird, und
daß ein Teilstrom vom Ablauf des aerob betriebenen Filterbehälters (12) über eine Rezirkulationsleitung (34) in den Zulauf des anoxischen ersten Filterbehälters (5) gelangt.

3. Verfahren nach Anspruch 1 oder 2,
dadurch gekennzeichnet,
daß zwei Filterbehälter (5a, 5b) austauschbar bzw. abwechselnd als erste bzw. zweite Filterbehälter (5a, 5b) in Reihe geschaltet beaufschlagt werden,
daß den in Reihe geschalteten Filterbehältern ein oder mehrere Filterbehälter (12a, 12b) folgen und daß die Schaltung der Filterbehälter (5a, 5b) entsprechend vorgenommener On-Line-Messung durchgeführt wird.

4. Verfahren nach einem der Ansprüche 1 bis 3,
dadurch gekennzeichnet,
daß zur Anpassung an sich ändernde Betriebsbedingungen eine Meß- und Steuereinrichtung (48) zur Steuerung der Schaltung der verschiedenen Filterbehälter (5, 12),
zur kontinuierlichen oder intermittierenden Einleitung von Medien zur Prozeßunterstützung und/oder
zum Verstellen des Druckes in den Filterbehältern (5, 12)
On-Line angeordnet wird.

5. Verfahren nach einem der Ansprüche 1 bis 4,
dadurch gekennzeichnet,
daß ein an die Reinwassersammelleitung (15) angeschlossener, gegebenenfalls druckentlasteter, über eine Spülwasserpumpe (21) mit der Oberseite der Filterbehälter (5, 12) verbundener Spülwasserbehälter (20) vorgesehen wird.

6. Verfahren nach einem der Ansprüche 1 bis 5,
dadurch gekennzeichnet,
daß die Behälter (5, 12) unter Druck stehen und ihnen Sauerstoff zugeführt wird,
daß den Behältern (5, 12) Luft mit einem Druck zugeführt wird, der über dem normalen Systemdruck liegt,
daß eine Entgasungseinrichtung (36) geöffnet wird, wenn der Druck über den Systemdruck ansteigt, und
daß eine Meß- und Steuereinrichtung (48) im Filterbehälterablauf die Zuführung des Sauerstoffs so regelt, daß eine bestimmte Sauerstoffkonzentration aufrecht erhalten wird.

7. Verfahren nach einem der Ansprüche 1 bis 6,
dadurch gekennzeichnet,
daß die Gaszumessung durch ein im oberen Bereich des Filterbehälters (5) angeordnetes Niveaumeßgerät (18) für den sich dort ausbildenden Gasraum oder durch eine Sauerstoff-On-Line-Messung an der Abführleitung (11) des Behälters (5) erfolgt.

8. Verfahren nach einem der Ansprüche 1 bis 7,
dadurch gekennzeichnet,
daß die sich in den Filterbehältern (5, 12) bildenden Reaktionsprodukte entweichen können, indem ein Entspannungsventil geöffnet wird und/oder ein Spülstrom durch die Filterbehälter (5, 12) geschickt wird.

9. Verfahren nach einem der Ansprüche 1 bis 8,
dadurch gekennzeichnet,
daß Filterbehälter (5, 12) mit umlaufenden Rezirkulationsleitungen (34) verwendet werden.

10. Verfahren nach einem der Ansprüche 1 bis 9,
dadurch gekennzeichnet,
daß Filterbehälter (5, 12), bei denen von der Oberseite eine Entlüftungsleitung (36) abgeht, die in eine Entlüftungssammelleitung (37) mit einem darin angeordneten Luftfilter (38) einmündet, verwendet werden.

11. Vorrichtung zum Reinigen von Rohwasser, insbesondere Abwasser, vorzugsweise in vorgereinigtem Zustand, bei dem das Abwasser zur Ermöglichung biologischer Prozesse durch Reaktoren (5, 12) fließt, in denen mehrere aufeinanderfolgende Behandlungsstufen mit unterschiedlichen Parametern stattfinden,
gekennzeichnet durch,
mehrere Filter zur Behandlung des Abwassers nach der Vorreinigung (1), die ausschließlich aus von unten nach oben durchflossenen Schwimmkornfiltern in abgeschlossenen Filterbehältern (5, 12) bestehen, wobei
die Filterbehälter (5, 12) nicht in einer festen Zuordnung, sondern entsprechend dem gewünschten Reinigungsvorgang und zur Anpassung an sich ändernde Betriebsbedingungen durch Ventile (13, 47) austauschbar in Reihe, parallel oder wechselseitig geschaltet sind
und
eine Gaszuführeinrichtung (3, 17) in der Rohwasserzuführleitung (4) bzw. in der Verbindungsleitung (11) zwischen den Filterbehältern (5, 12) und/oder an den Filterbehältern (5, 12) direkt zum Einleiten eines Mediums zur Prozeßunterstützung vorgesehen ist.

12. Vorrichtung nach Anspruch 11,
dadurch gekennzeichnet,
daß der erste Filterbehälter (5) gegenüber Luft abschließbar und damit anoxisch betreibbar ist,
daß einem oder mehreren nachfolgenden Filterbehältern (12) reiner Sauerstoff zuführbar ist, und
daß für einen Teilstrom eine Rezirkulationsleitung (34) zwischen dem Ablauf des aerob betreibbaren Filterbehälters (12) und dem Zulauf des anoxischen ersten Filterbehälters (5) angeordnet ist.

13. Vorrichtung nach Anspruch 11 oder 12,
dadurch gekennzeichnet,
daß zwei Filterbehälter (5a, 5b) austauschbar bzw. abwechselnd als erste bzw. zweite Filterbehälter (5a, 5b) in Reihe geschaltet beaufschlagt sind,
daß den in Reihe geschalteten Filterbehältern ein oder mehrere Filterbehälter (12a, 12b) folgen und daß die Schaltung der Filterbehälter (5a, 5b) entsprechend vorgenommener On-Line-Messung erfolgt.

14. Vorrichtung nach einem der Ansprüche 11 bis 13,
dadurch gekennzeichnet,
daß zur Anpassung an sich ändernde Betriebsbedingungen eine On-Line angeordnete Meß- und Steuereinrichtung (48) die Schaltung der verschiedenen Filterbehälter (5, 12) steuert, Medien zur Prozeßunterstützung kontinuierlich oder intermittierend einleitet und/oder den Druck in den Filterbehältern (5, 12) verstellt.

15. Vorrichtung nach einem der Ansprüche 11 bis 14,
dadurch gekennzeichnet,
daß ein an die Reinwassersammelleitung (15) angeschlossener, gegebenenfalls druckentlasteter Spülwasserbehälter (20) vorgesehen ist, der über eine Spülwasserpumpe (21) mit der Oberseite der Filterbehälter (5, 12) verbunden ist.

16. Vorrichtung nach einem der Ansprüche 11 bis 15,
dadurch gekennzeichnet,
daß die Behälter (5, 12) unter Druck stehen und Einrichtungen (3, 17) zum Zuführen von Sauerstoff vorgesehen sind,
daß die Einrichtungen (3, 17) den Behältern (5, 12) Luft mit einem Druck zuführen, der über dem normalen Systemdruck liegt,
daß für einen über den Systemdruck ansteigenden Druck eine zu öffnende Entgasungseinrichtung (36) vorgesehen ist,
und
daß eine Meß- und Steuereinrichtung (48) im Filterbehälterablauf die Zuführung des Sauerstoffs zur Aufrechterhaltung einer bestimmten Sauerstoffkonzentration regelt.

17. Vorrichtung nach einem der Ansprüche 11 bis 16,
dadurch gekennzeichnet,
daß zur Gaszumessung ein im oberen Bereich des Filterbehälters (5) angeordnetes Niveaumeßgerät (18) für den sich dort ausbildenden Gasraum oder eine Sauerstoff-On-Line-Messung an der Abführleitung (11) des Behälters (5) vorgesehen ist.

18. Vorrichtung nach einem der Ansprüche 11 bis 17,
dadurch gekennzeichnet,
daß ein zu öffnendes Entspannungsventil und/oder ein durch die Filterbehälter (5, 12) zu schickender Spülstrom zum Entweichen der sich in den Filterbehältern (5, 12) bildenden Reaktionsprodukte vorgesehen ist.

19. Vorrichtung nach einem der Ansprüche 11 bis 18,
dadurch gekennzeichnet,
daß an den Filterbehältern (5, 12) umlaufende Rezirkulationsleitungen (34) vorgesehen sind.

20. Vorrichtung nach einem der Ansprüche 11 bis 19,
dadurch gekennzeichnet,
daß von der Oberseite eines jeden Filterbehälters (5, 12) eine Entlüftungsleitung (26) abgeht, die in eine Entlüftungssammelleitung (37) einmündet, in der ein Luftfilter (38) angeordnet ist.

## Claims

1. A method for purifying raw water, particularly waste water, preferably in a prepurified condition, wherein the waste water for allowing biological processes is streaming through reactors (5, 12) in which a plurality of successive treatment steps occur with different parameters,
characterised by the steps of:
- providing a plurality of swimming grain filter means in sealed filter containers (5, 12),
- arranging the filter containers (5, 12) in a non-fixed arrangement corresponding to the desired purification procedure and for matching varying operation conditions by means of valves (13, 47) causing in a series, parallel or reciprocal interconnection,
- providing a gas supply means (3, 17) either at a raw water supply conduit (4) or at a connection line (11) between the filter containers (5, 12) and/or directly at the filter containers (5, 12) for introduction of a medium to support the procedure, and
- passing the filters exclusively from below to above for treating the waste water after prepurification (1).

2. Method of claim 1, characterised by the steps of:
- air-tightning the first filter container (5) after prepurication, and thereby anoxic operation,
- leading the raw water through one or several filter containers (12) whereby pure oxygen is supplied, and
- supplying a partial flow from an outlet of the aerobe operated filter container (12) through a recirculation line (34) into the entrance of the first filter container (5).

3. Method of claims 1 or 2, characterised by the steps of:
- providing two filter containers (5a, 5b) being arranged in series either replaceable or alternating as either first or second filter containers (5a, 5b),
- arranging one or several filter containers (12a, 12b) successive to the filter containers which are arranged in series, and
- interconnecting the arrangement of the filter containers (5a, 5b) according to the on-line-measuring.

4. Method of claims 1 - 3, characterised by the steps of:
- arranging on-line a measuring and control means (48) for controlling the interconnection of the different filter containers (5, 12) for a continuous or intermittent introduction of media to support the procedure and/or adjusting a pressure in the filter containers (5, 12) in order to match variable operation conditions.

5. Method of claims 1 - 4, charchterised by the step of:
- providing a wash water container (20) which is connected to the pure water collector line (15) and the top of the filter containers (5, 12) via a pure water pump (21), whereby the pure water container is relieved from pressure, if desired.

6. Method of claims 1 - 5, charchterised by the steps of:
- supplying oxygen to the containers (5, 12) which are pressurised,
- supplying air to said containers (5, 12) having a pressure being higher than the normal system pressure,
- opening a degassing means (36) if the pressure exceeds the system pressure, and
- adjusting the input of oxygen into the outlet of the filter container by the measuring and control means (48) such that a defined concentration of oxygen is maintained.

7. Method of claims 1 - 6, characterised by the step of:
- accomplishing the gas proportion by means of a level measuring means (18) arranged for the gas space built there in the upper area of the filter container (5) or by means of an oxygen on-line-measuring at the outlet line (11) of the container (5).

8. Method of claims 1 - 7, characterised by the step of:
- setting free the reaction products produced withing the filter containers (5, 12) by opening a stress-relieving valve and/or introducing a wash flow into and through the filter containers (5, 12).

9. Method of claims 1 - 8, characterised by the step of:
- providing filter containers (5, 12) having recirculating recirculation lines (34).

10. Method of claims 1 - 9, charchterised by the step of:
- providing filter containers (5, 12) from which an air relieving line (36) protrudes out at the top and which than debouches into a collector air relieving line (37) with an air purifier (38) arranged therein.

11. An apparatus for purifying raw water, particularly waste water, preferably in a prepurified condition, wherein the waste water for allowing biological processes runs through reactors (5, 12) in which several successive treatment steps occur with different parameters,
charchterised by
- several filters for treating waste water after prepurication (1) which exclusively comprise swimming grain filters and are passed from below to above in sealed filter containers (5, 12) whereby the filter containers (5, 12) are not arranged in a fixed allocation but corresponding to the desired purifying procedure and for matching per se varying operation conditions interchangeable by means of valves (13, 47) in a series, parallel or reciprocal interconnection, and
- a gas supply means (3, 17) either leading into a raw water supply conduit (4) or into a connection line (11) between the filter containers (5, 12) and/or directly at the filter containers (5, 12) for supplying a medium to support the procedure.

12. Apparatus of claim 11, characterised in that
- the first filter container (5) is air-tightenable and thereby anoxic operable,
- one or more successive filter containers (12) are adapted to be fed with pure oxygen, and in that
- a recirculation line (34) for a partial flow is arranged between the delivery of the filter containers (12) which are aerobe operable and the supply of the first filter container (5).

13. Apparatus of claims 11 or 12, characterised in that
- two filter containers (5a, 5b) being arranged in series either replaceable or alternating as either first or second filter containers (5a, 5b),
- one or several filter containers (12a, 12b) are successively arranged to the filter containers which are arranged in series, and
- the filter containers (5a, 5b) are arranged according to the conducted on-line-measuring.

14. Apparatus of claims 11 to 13, charchterised in that an on-line arranged measuring and control means (48) controlls the arrangement of the different filter containers (5, 12), introduces mediums for supporting the procedure continuously or intermittently, and/or adjusts the pressure in the filter container (5, 12) in order to be accommodated to variable operation conditions.

15. Apparatus of claims 11 to 14, characterised in that
- a wash water container (20) which is relieved from pressure, if desired, is connected to the pure water collector line (15) and connected to the top of the filter containers (5, 12) via a pure water pump (21).

16. Apparatus of claims 11 to 15, charchterised in that
- the containers (5, 12) are under pressure and comprise means (3, 17) for supplying oxygen,
- the means (3, 17) supply air to the containers with a pressure which is higher than the normal system pressure,
- a degassing means (36) with capability to be opened if the pressure exceeds the system pressure, and
- the measuring and control means (48) adjusts the input of oxygen in the delivery of the filter container for maintaining the definite concentration of oxygen.

17. Apparatus of claims 11 to 16, charchterised in that
- a level measuring means (18) for accomplishing the gas proportion is arranged in the upper area of the filter container (5) for the gas space built there, or an oxygen on-line-measuring is arranged at the delivery line (11) of the container (5).

18. Apparatus of claims 11 to 17, charchterised by
- a stress-relieving valve with the capability to be opened and/or a wash flow which is introduced through thefilter containers (5, 12) for escaping the reaction products built in the filter containers (5, 12).

19. Apparatus of claims 11 to 18, charchterised in that the travelling recirculation lines (34) are arranged on the filter containers (5, 12).

20. Apparatus of claims 11 to 19, charchterised in that
- the filter containers (5, 12) comprise air relieving lines (26) which protrude out at the top of each filter container and which than debouches into a collector air relieving line (37) with an air purifier (38) arranged therein.

## Revendications

1. Procédé de purification d'eaux brutes, en particulier d'eaux usées, de préférence en état de nettoyage préalable, dans lequel les eaux usées, pour permettre la réalisation de processus biologiques, s'écoulent à travers des réacteurs (5,12), dans lesquels ont lieu plusieurs étapes de traitement, qui se suivent les unes les autres avec différents paramètres, caractérisé en ce que
- plusieurs filtres à grains flottants sont disposés dans des réservoirs à filtres (5, 12) fermés,
- les réservoirs à filtres (5, 12) sont montés non pas dans un ordre fixe, mais en fonction du processus de purification voulu et de façon à s'adapter à des conditions de fonctionnement qui se modifient, en pouvant être interchangés à l'aide de vannes (13, 47) et mis en série, en parallèle ou de façon alternée,
- l'on prévoit un dispositif d'amenée de gaz (3, 17) dans la conduite d'amenée de l'eau brute (4) ou dans la conduite de liaison (11) située entre les réservoirs à filtres (5, 12) et/ou sur les réservoirs à filtres (5, 12) directement pour introduire un agent servant à accompagner le processus, et
les filtres sont exclusivement parcourus de bas en haut pour traiter les eaux usées après leur nettoyage préalable (1).

2. Procédé selon la revendication 1,
caractérisé en ce que le premier réservoir à filtre (5) est respectivement fermé après le nettoyage préalable par rapport à l'air et est traité de cette façon à l'abri d'une oxydation, en ce que l'eau brute est dirigée ensuite à travers un ou plusieurs réservoirs à filtres (12) dans lesquels de l'oxygène pur est amené, et en ce qu'une partie de l'écoulement du réservoir à filtre (12) utilisé de façon aérobique arrive par une conduite de recyclage (34) à l'entrée du premier réservoir à filtre (5) non oxygéné.

3. Procédé selon la revendication 1 ou 2, caractérisé en ce que deux réservoirs à filtres (5a, 5b) sont alimentés de façon interchangeable ou alternative en tant que premier ou deuxième réservoir à filtre (5a, 5b) en étant montés en série, en ce qu'un ou plusieurs réservoirs à filtres (12a, 12b) font suite aux réservoirs à filtres montés en série et en ce que le montage des réservoirs à filtres (5a, 5b) est effectué en fonction d'un mesurage entrepris en ligne.

4. Procédé selon l'une des revendications 1 à 3, caractérisé en ce que pour adapter le système à des conditions de fonctionnement qui se modifient, on dispose en ligne un dispositif de mesure et de commande (48) qui sert à commander le branchement des différents réservoirs à filtres (5, 12) de façon à introduire de façon continue ou intermittente des agents d'accompagnement du processus et/ou pour régler la pression dans les réservoirs à filtres (5, 12).

5. Procédé selon l'une des revendications 1 à 4, caractérisé en ce que l'on prévoit un réservoir d'eau de rinçage (20)raccordé au collecteur d'eau propre (15)le cas échéant dépressurisé, relié par l'intermédiaire d'une pompe d'eau de rinçage (21) à la face supérieure des réservoirs à filtres (5, 12).

6. Procédé selon l'une des revendications 1 à 5, caractérisé en ce que les réservoirs (5, 12) sont sous pression et de l'oxygène leur est amené, en ce que l'on amène de l'air aux réservoirs (5, 12)sous une pression qui se trouve au-dessus de la pression normale du système, en ce que l'on ouvre un dispositif de dégazage (36), quand la pression monte au-dessus de la pression du système, et en ce qu'un système de mesure et de commande (48) règle dans l'écoulement provenant des réservoirs à filtres l'arrivée de l'oxygène de telle sorte que soit maintenue une concentration déterminée en oxygène.

7. Procédé selon l'une des revendications 1 à 6, caractérisé en ce que le dosage de gaz a lieu au moyen d'un appareil de mesure de niveau (18), qui est disposé dans la zone supérieure du réservoir à filtre (5) ou par une mesure en ligne de l'oxygène sur la conduite de sortie (11) du réservoir (5).

8. Procédé selon l'une des revendications 1 à 7, caractérisé en ce que les produits de réaction qui se forment dans les réservoirs à filtres (5, 12) peuvent être évacués en ouvrant une vanne de détente et/ou en envoyant un courant de rinçage à travers les réservoirs à filtres (5, 12).

9. Procédé selon l'une des revendications 1 à 8, caractérisé en ce que l'on utilise des réservoirs à filtres (5, 12) avec des conduites de recyclage (34) qui font tout le tour.

10. Procédé selon l'une des revendications 1 à 9, caractérisé en ce que l'on utilise des réservoirs à filtres (5, 12), dans lesquels part de la face supérieure une conduite de purge (36), qui débouche dans un collecteur de purge (37) avec un filtre à air (38), disposé dedans.

11. Dispositif servant à purifier eaux brutes, en particulier des eaux usées, de préférence dans un état préalablement nettoyé, dans lequel les eaux usées s'écoulent à travers des réacteurs (5, 12) pour permettre le déroulement de processus biologiques, réacteurs dans lesquels ont lieu plusieurs étapes de traitement, qui se suivent les unes les autres, avec des paramètres différents, caractérisé par plusieurs filtres servant à traiter les eaux usées après le nettoyage préalable (1), filtres qui consistent exclusivement en des filtres à grains flottants parcourus de bas en haut dans des réservoirs de filtres fermés (5, 12), les réservoirs de filtres (5, 12) n'étant pas montés dans un ordre fixe, mais de façon interchangeable en série, en parallèle ou de façon alternée, au moyen de vannes (13, 47), en fonction du processus voulu de purification et de façon à s'adapter à des conditions de fonctionnement qui se modifient, et en ce qu'il est prévu un dispositif d'amenée de gaz (3, 17) dans la conduite d'amenée de l'eau brute (4) ou dans la conduite de liaison (11), située entre les réservoirs à filtres (5, 12) et/ou sur les réservoirs à filtres (5, 12) directement pour introduire un agent servant à accompagner le processus.

12. Dispositif selon la revendication 11, caractérisé en ce que l'on peut fermer le premier réservoir à filtre (5) par rapport à l'air et de cette façon le faire fonctionner à l'abri de l'oxygène, en ce que l'on peut amener de l'oxygène pur à un ou plusieurs réservoirs à filtres suivants (12), et en ce que l'on dispose pour un courant partiel une conduite de recyclage (34) entre la sortie du réservoir à filtre (12), que l'on peut faire fonctionner de manière aérobique, et l'arrivée du premier réservoir à filtre (5) privé d'oxygène.

13. Dispositif selon la revendication 11 ou la revendication 12, caractérisé en ce que l'on alimente deux réservoirs à filtres (5a, 5b) de façon interchangeable ou alternative en tant que premier ou deuxième réservoir à filtre (5a, 5b) en les montant en série, en ce qu'un ou plusieurs réservoirs à filtres (12a, 12b) font suite aux réservoirs à filtres montés en série, et en ce que le montage des réservoirs à filtres (5a, 5b) est effectué en fonction d'une mesure entreprise en ligne.

14. Dispositif selon l'une des revendications 11 à 13, caractérisé en ce que pour adapter le système à des conditions de fonctionnement qui se modifient, un dispositif (48) de mesure et de commande, disposé en ligne, commande le branchement des différents réservoirs à filtres (5, 12), introduit des agents pour accompagner le processus de façon continue ou intermittente et/ou règle la pression dans les réservoirs à filtres (5, 12).

15. Dispositif selon l'une des revendications 11 à 14, caractérisé en ce qu'il est prévu un réservoir d'eau de rinçage (20), raccordé au collecteur d'eau pure (15), le cas échéant dépressurisé, qui est relié par l'intermédiaire d'une pompe d'eau de rinçage (21) à la face supérieure des réservoirs à filtres (5, 12).

16. Dispositif selon l'une des revendications 11 à 15, caractérisé en ce que les réservoirs (5, 12) sont sous pression et il est prévu des dispositifs (3, 17) pour amener de l'oxygène, en ce que les dispositifs (3, 17) amènent aux réservoirs (5, 12) de l'air sous une pression qui se trouve au-dessus de la pression normale du système, en ce qu'il est prévu pour une pression qui monte au-dessus de la pression du système un dispositif de dégazage (36) à ouvrir, et en ce qu'un dispositif de mesure et de commande (48) qui se trouve dans la sortie des réservoirs à filtres règle l'arrivée de l'oxygène pour maintenir une concentration déterminée en oxygène.

17. Dispositif selon l'une des revendications 11 à 16, caractérisé en ce qu'il est prévu pour mesurer les gaz, un appareil de mesure de niveau (18), disposé dans la zone supérieure du réservoir à filtre (5), pour la chambre à gaz constituée à cet endroit ou une mesure en ligne de l'oxygène sur la conduite de sortie (11) du réservoir (5).

18. Dispositif selon l'une des revendications 11 à 17, caractérisé en ce qu'il est prévu une vanne de détente à ouvrir et/ou un courant de rinçage à envoyer à travers les réservoirs à filtres (5, 12) pour évacuer les produits de la réaction qui se forment dans les réservoirs à filtres (5, 12).

19. Dispositif selon l'une des revendications 11 à 18, caractérisé en ce qu'il est prévu sur les réservoirs à filtres (5, 12) des conduites de recyclage (34) qui font tout le tour.

20. Dispositif selon l'une des revendications 11 à 19, caractérisé en ce que depuis la face supérieure de chacun des réservoirs à filtres (5, 12) il part une conduite de purge (26), qui débouche dans un collecteur de purge (37), dans lequel est disposé un filtre à air (38).
